# EUROPEAN PATENT SPECIFICATION

(11) **EP 3 845 816 B1**
(45) Date of publication and mention of the grant of the patent: **25.10.2023**
(21) Application number: 20201468.4
(22) Date of filing: 19.02.2018
(51) Int. Cl.: F24C 3/12, F24C 7/08, G05G 1/08, F16D 3/18, G05G 5/05, A47J 31/44

(54) **COOKING APPARATUS WITH A KNOB ASSEMBLY**
KOCHVORRICHTUNG MIT KNOPFANORDNUNG
APPAREIL DE CUISSON COMPORTANT UN ENSEMBLE BOUTON

(30) Priority: 17.02.2017 KR 20170021879; 17.02.2017 KR 20170021878; 22.02.2017 KR 20170023774; 24.07.2017 KR 20170093734; 26.07.2017 KR 20170094806; 06.12.2017 KR 20170167073
(43) Date of publication of application: 07.07.2021
(62) Divisional of application: 18157306.4
(73) Proprietor: LG Electronics Inc., Yeongdeungpo-gu Seoul 07336 (KR)
(72) Inventor: Ha, Yeonsik, 08592 Seoul (KR); Cho, Seong Sik, 08592 Seoul (KR)
(74) Representative: Ter Meer Steinmeister & Partner

(56) References cited:
- EP-A1- 3 493 721
- WO-A1-2013/175438
- WO-A1-2013/175441
- US-A1- 2014 260 775
- US-A1- 2016 265 786

## Description

### 1. Technical field

A knob assembly with a display and a cooking apparatus having a knob assembly are disclosed herein.

### 2. Background

A cooking apparatus is a kind of home appliance that cooks food or other items (hereinafter "food") and may be installed or provided in a kitchen space. Such cooking apparatuses may be classified into various categories according to heat source, form or shape thereof, and type of fuel used in the cooking apparatus. The cooking apparatus may be classified as an open-type cooking apparatus and/or a closed-type cooking apparatus according to a space in which food is placed. The closed-type cooking apparatus may include an oven, or a microwave oven, for example, and the open-type cooking apparatus may include a cooktop, or a hob, for example.

The closed-type cooking apparatus may be a cooking apparatus configured to enclose a space in which food may be placed and may heat the enclosed space to cook the food. The open-type cooking apparatus may be a cooking apparatus in which food or a vessel containing food may be placed in an open space and may be configured to heat the food or the vessel to cook the food.

The closed-type cooking apparatus may be provided with a cooking chamber, in which the food may be placed and which may be a space which is enclosed when the food is cooked. Food may be cooked in the cooking chamber. A heat source may be provided in a space inside or outside of the cooking chamber to heat the cooking chamber.

A composite cooking apparatus may be provided in which a closed-type cooking apparatus and an open-type cooking apparatus may be installed and a plurality of heat sources may be combined to simultaneously cook a plurality of foods. In the composite cooking apparatus, the open-type cooking apparatus may be located above the closed-type cooking apparatus. A plurality of heaters or burners may be installed at or provided on the open-type cooking apparatus so that the open-type cooking apparatus may be able to simultaneously cook a plurality of foods.

A user may use the closed-type cooking apparatus when cooking food, such as, for example, barbecued food or baked goods or grilled food, and may use the open-type cooking apparatus which is exposed above the closed-type cooking apparatus when cooking food which may be accommodated and heated in a vessel or container. The open-type cooking apparatus may be a gas range, and such an open-type cooking apparatus may cook food using a flame generated when a gas burns.

A variety of methods may be provided to enable a user to adjust a strength of a flame of such an open-type cooking apparatus. A method of adjusting a power level by using a knob, which may rotate around a predetermined rotational shaft, to adjust a rotational amount of the knob may be widely used. The knob may be connected to a valve that controls a flow rate of a gas to mechanically control opening and closing amounts of the valve. A method of electronically measuring a rotational amount of the knob and electronically controlling the opening and closing amounts of the valve based on the measured result may also be applied to the knob.

A cooking apparatus or composite cooking apparatus including an oven may be provided with a display or module which may display a timer time, and an operating state, for example. In an oven required to cook food for a long time, a timer function may be necessary, a dial-type timer may be employed in the oven, and a structure capable of displaying status information of the cooking apparatus through a separate display may be provided.

Even though the cooking apparatus is provided with the same cooktop, the display may not be necessary when only a gas range is provided at the cooking apparatus, but in the composite cooking apparatus, the display may be needed so as to display various information. However, information displayed by individual products may be different, and designs of a screen of a display, and a user interface (UI), for example, may be separately developed.

WO 2013 175438 A1 presents a control device for gas appliances that comprises: a manual-control means, which can be turned about a first axis for setting a time interval; a circuit arrangement that includes sensor means, configured for detecting movements of the manual-control means; and a supporting structure, which can be associated in a stationary way to a gas tap, the supporting structure being, in particular, designed for being mounted within a body of a gas appliance. At least one of the manual-control means and the supporting structure has an axial cavity or defines at least part of a passage, where there can be received a corresponding part of the gas tap. A part of the sensor means is movable with respect to a second axis, and operatively set between the manual-control means and the movable part of the sensor means is a transmission arrangement.

WO 2013 175441 A1 presents a control device for gas appliances that comprises: manual-control means; a circuit arrangement that includes control means, electrical-interconnection means, detection means configured for detecting actuation of the manual-control means and supplying corresponding signals to the control means; and a supporting structure that can be associated in a stationary way with respect to a gas tap, wherein the supporting structure includes a first part of stationary structure that defines a housing for at least part of the circuit arrangement, the first part of structure being in particular designed for being housed within a body of the gas appliance. The control means are designed for counting the time, the circuit arrangement includes display means and the supporting structure includes a second part of stationary structure associated to or projecting from the first part of structure and configured for supporting the display means in a fixed or not angularly rotatable position, where in particular, in an installed condition of the device, the second part of structure projects on the outside of the body of the gas appliance.

US 2014/260775 A1 presents a household cooking appliance that includes a cooking module, a control panel, a rotatable control knob, and a dual-encoder ON/OFF selector for the cooking module. The dual-encoder ON/OFF selector includes a rotatable bezel on the control panel. The rotatable bezel controls activation and deactivation of the cooking module. The rotatable bezel includes an opening, wherein the rotatable control knob extends through the opening of the rotatable bezel and is concentrically arranged within the rotatable bezel.

EP 3 493 721 A1, an intermediate document, relates to an electro-mechanical interface for an appliance.

US 2016/265786 A1 relates to a cooking appliance configured such that a heat source control unit is manipulated using a rotary knob. The restraint of a rotary knob or a shaft of a heat source control unit connected with the rotary knob is prevented.

### SUMMARY

The objects are solved by the invention set out by the features of the independent claim. Preferred embodiments are described by the dependent claims.

According to one embodiment, a knob assembly comprises a knob configured to adjust a power level of a power source; and a knob ring configured to surround a periphery of the knob, configured to be rotatable independent of the knob. The knob may be coupled to an adjustment shaft, e.g. for adjusting a power level of a burner or cooktop.

The knob ring may be moved from an initial position to a second position by an external force. The knob ring may return to the initial position when the external force is released. A knob ring encoder may be configured to detect a manipulation of the knob ring. A knob encoder may be provided and configured to detect a manipulation of the knob. An actuating member is coupled to the knob ring. A support frame may support an outer circumferential surface of the actuating member. A fixing frame is coupled to the support frame and configured to prevent the actuating member from escaping from the support frame. A circular plate may be configured to be inserted between the knob ring and a panel of an apparatus on which the knob assembly is provided. A bearing shell may be provided with a cylinder inserted between the actuating member and the support frame. The knob ring may support the adjustment shaft at two or more points thereof. The knob ring may include a knob ring main body configured to form an exterior appearance thereof; a rear surface plate coupled to a rear surface of the knob ring main body and provided with a support hole configured to support the adjustment shaft which passes through the support hole; and a support pipe coupled to the rear surface plate and configured to support the adjustment shaft. The support pipe may include a flange coupled to the rear surface plate; and a tapered pipe formed to extend from the flange and provided with a cap configured to support the adjustment shaft. The display may be configured to display a power level and a timer time. The power level displayed on the display may be detected and displayed based on a rotational amount of the knob. The timer time displayed on the display may be detected and displayed based on manipulation of the knob ring. The display may be coupled to the knob ring main body through a display housing. A finishing cap may be coupled to an outside of the display housing. The finishing cap may be made of a transparent or semitransparent material to allow information displayed on the display to be visible. The display may include a portion for displaying a power level and a portion for displaying a timer time. If the timer time is not set, only the power level may be displayed. If the timer time is set, the power level may be displayed for a first predetermined period of time and then the timer time may be displayed for a second predetermined period of time. The power level may be displayed with a red color and the timer time is displayed with a white color or a blue color.

According to another aspect, a cooking apparatus may be provided, comprising a knob assembly according to any one of the herein described embodiments.

According to another unclaimed aspect, a knob assembly is provided, comprising: a rotatable knob configured to adjust a power level of a power source; and a knob ring that surrounds a periphery of the knob, configured to be rotatable independent of the knob, and provided with an electronic display that displays the power level and a timer time.

According to another unclaimed aspect, a cooking apparatus is provided comprising said knob assembly.

According to another unclaimed aspect, a cooking apparatus is provided, comprising: at least one knob that adjusts a power level of at least one burner; at least one knob ring that surrounds the at least one knob and is rotatable independent of the at least one knob; and a display provided on the at least one knob ring and configured to display information of the cooking apparatus.

The information of the cooking apparatus may include the power level of the at least one burner and a timer time. The display may be an electronic display including different lighting devices with different colors.

### BRIEF DESCRIPTION OF THE DRAWINGS

Embodiments will be described in detail with reference to the following drawings in which like reference numerals refer to like elements, and wherein:
FIG. 1 is a view of a cooking apparatus provided with a separate display;
FIG. 2 is a view of a front surface of a knob assembly according to an embodiment;
FIG. 3 is a side view of a cross section of the knob assembly of FIG. 2;
FIG. 4 is an exploded view of a components of the knob assembly of FIG. 2;
FIG. 5 is a cross-sectional view of the knob assembly of FIG. 2;
FIG. 6 is a view of a rear surface of the knob assembly of FIG. 2;
FIG. 7 and FIG. 8 are views of different manipulation states of a knob ring of the knob assembly of FIG. 2;

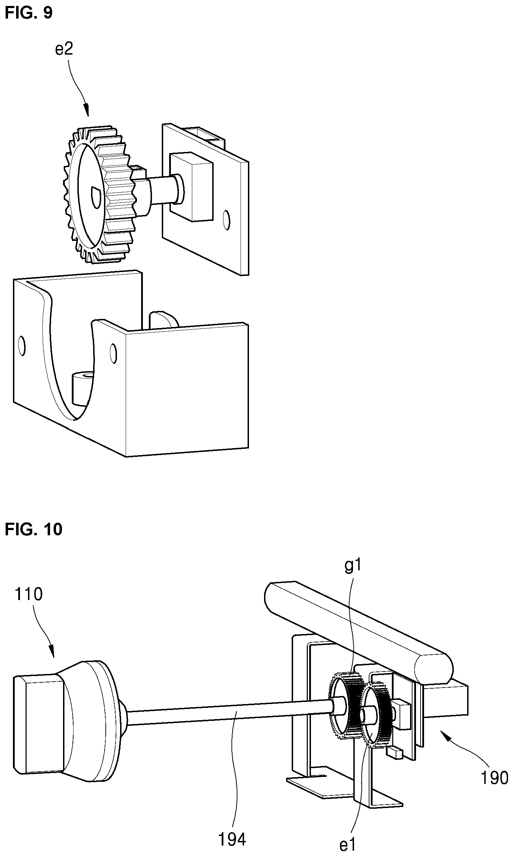

FIG. 9 is a view of a knob ring encoder of the knob assembly of FIG. 2;
FIG. 10 is a view of a knob encoder of the knob assembly of FIG. 2;
FIG. 11 is an exploded perspective view of the knob ring of FIG. 2; and
FIG. 12 is an exploded perspective view of a rear surface of components of the knob ring of FIG. 2.

### DETAILED DESCRIPTION

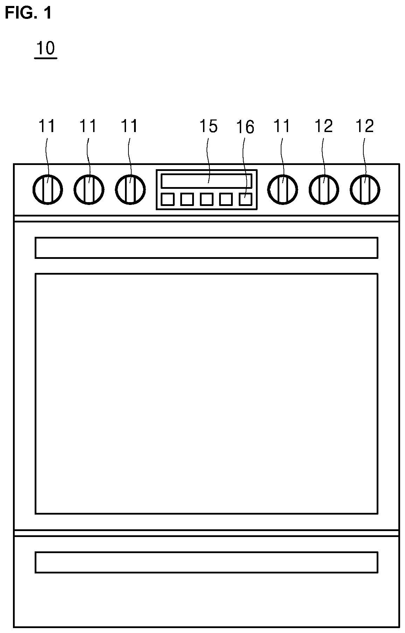

Referring to FIG. 1, a cooking apparatus 10 may be provided with an oven which may include knobs 11 configured to adjust a power level, knobs 12 configured to adjust a timer time, a display or module 15 configured to display a status of the cooking apparatus 10, and switches 16 configured to each perform a separate operation or manipulation, at a front surface of the cooking apparatus 10. As the oven may be required to cook food for a long time, a timer that sets an operating time of the oven may be necessary. For unity of design and convenience of manipulation, a rotary switch may be applied to the knob 11 configured to adjust a power level and the knob 12 configured to adjust a timer time.

The display 15 may display an operation or manipulation state, for example, of the cooking apparatus 10. Information displayed on the display 15 may include an output, for example, a temperature of a burner, the timer time, and a cooking mode of an automatic cooking function, for example. However, if a configuration of a flame hole of the cooking apparatus 10 is changed or a specification of a product is changed, information or a user interface (UI), which may be displayed on the display 15, may be changed, and the display 15 may be separately designed.

As the knob 11 configured to adjust power level and the knob 12 configured to adjust a timer time may have a same or similar shape, the knobs 11 and 12 may be superior in terms of design, but in terms of user convenience, it may be difficult for a user to recognize which knob performs which function. To resolve the above-described problems, a knob assembly is provided that includes a knob handle configured to adjust a power level of a cooking apparatus and a knob ring configured to adjust a timer time, for example, of the cooking apparatus. A display may be provided at the knob ring so that the knob assembly may be easily used by a user and may have a superior design and an advantage in terms of component sharing.

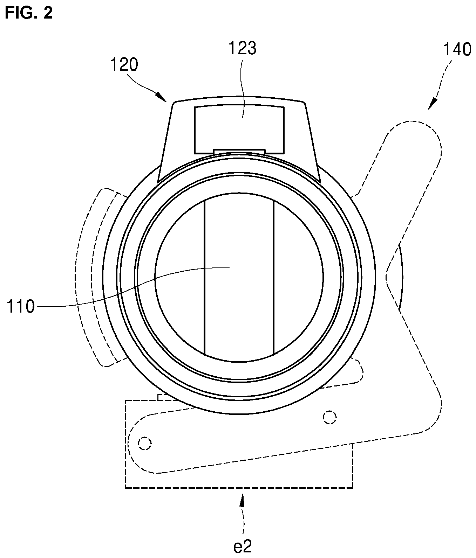

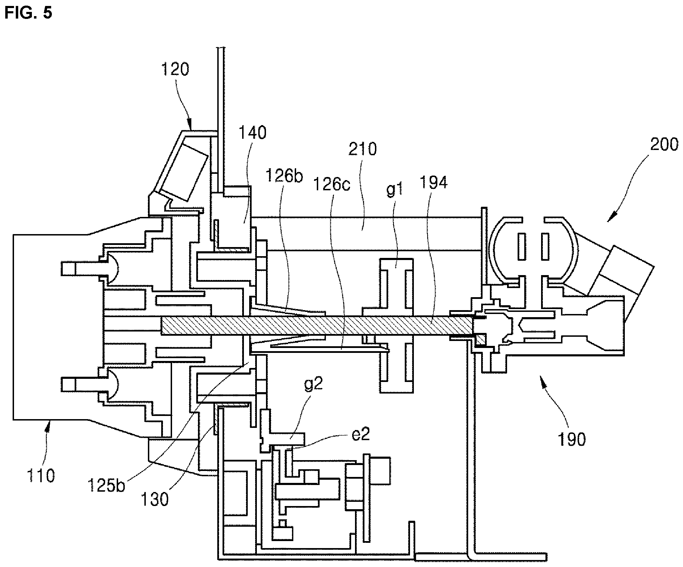

Referring to FIG. 2 through FIG. 5, a knob handle or knob 110 may be connected to an adjustment shaft 194 of a power level adjuster or heat adjuster 190 configured to adjust a power level. The knob handle 110 may include a non-returning rotary switch such that the non-returning rotary switch may not return to an initial position once it is rotated by an external force. The knob handle 110 may be maintained at a position at which a user rotates the knob handle 110, and allow an output of power or flame at a corresponding flame hole according to a rotational angle of the knob handle 110. That is, a position of the knob handle 110 may correspond to how much power is released from a heat source of the cooking apparatus. For example, in a case of a gas burner, the power level adjuster 190 may be a valve, and in the case of a microwave oven or an induction range, the power level adjuster 190 may be an output adjuster, such as a variable resistor, in order to adjust an output thereof.

The knob handle 110 may have a circular shape and may be provided with a protruding handle. The protruding handle may be bar-shaped, but a shape of the handle may be variously modified and embodiments are not limited thereto. The knob handle 110 may be, for example, manufactured of a synthetic resin injection material or may be manufactured by processing a metal material. A material and shape of the knob handle 110 may be variously changed.

A knob ring 120 may be provided at an outer circumferential surface of the knob handle 110 to improve an exterior appearance of a periphery of the knob handle 110. The knob ring 120 may support the knob handle 110 and may finish the exterior appearance of the periphery of the knob handle 110 to improve a quality of the exterior appearance.

The knob ring 120 may confine or restrict a position of the knob handle 110. The power level adjuster 190 may be applied or coupled to the adjustment shaft 194, and if the knob handle 110 is coupled to only the adjustment shaft 194, the knob handle 110 may arbitrarily move in different directions. The knob ring 120 according to embodiments may confine or restrict the position of the knob handle 110 and may allow the knob handle 110 to be maintained at a certain or set position.

The knob ring 120 may include a timer manipulation switch and a display that displays a timer time and power level. The knob ring 120 rotates independent of the knob handle 110, the timer time may be set through a manipulation or rotation of the knob ring 120, and a display or display 123 may be provided at the knob ring 120 so that the timer time and the power level may be displayed on the display 123.

A knob encoder e1 may be provided to detect a rotational amount of the knob handle 110, and a knob ring encoder e2 may be provided to detect a rotational amount of the knob ring 120. The knob encoder e1 may detect a rotation amount of a gear g1 coupled to the adjustment shaft 194, and the knob ring encoder e2 may sense or detect rotation of a knob ring gear or second gear g2 provided at a actuating member 150.

The knob handle 110 and the knob ring 120 are provided on an outside of a front panel c of the cooking apparatus 10. The knob handle 110 and the knob ring 120 may be provided to pass through a space or hole h in the front panel c of the cooking apparatus 10.The power level, and the timer time, for example, may be displayed on the display 123. The power level displayed on the display 123 may be detected and displayed based on the rotational amount of the knob handle 110, and the timer time displayed on the display 123 may be detected and displayed based on manipulation of the knob ring 120.

The display 123 may include a portion that displays the power level and a portion that displays the timer time, but the power level and the timer time may be selectively displayed on a single display 123. For example, if the timer time is not set, only the power level may be displayed. If the timer time is set, the power level may be displayed for a predetermined period of time and then the timer time may be displayed for a predetermined period of time.

A user may easily verify or recognize whether a displayed number represents the power level or the timer time by differentiating a light color when the power level is displayed from a light color when the timer time is displayed. For example, the power level may be displayed with a red color and the timer time may be displayed with a white color or a blue color. When both the power level and the timer time are displayed, the power level may be displayed for two seconds and then the timer time may be displayed for a next two seconds.

As described above, when both the power level and the timer time are adjusted and displayed through the knob assembly, a separate display may not be necessary at the front panel c. A structure of such a knob assembly may be applied to both an oven range provided with an oven and a cooktop including only a burner, and may have an advantage in that the knob assembly may be used as a component shared by the oven range and the cooktop.

An actuating member 150 is coupled to a rear surface of the knob ring 120 and integrally rotates with the knob ring 120. A rotational amount of the actuating member 150 may be the same as the rotational amount of the knob ring 120. By detecting the rotational amount of the actuating member 150, a manipulation of the knob ring 120 may be detected. The knob ring gear g2 may be provided at the actuating member 150.

A support frame 140 is coupled to the front panel c to support the knob ring 120. The knob handle 110 and the knob ring 120 may each be coupled at aligned positions on the front panel c, and the front panel c may be made of a metal thin plate material, for example. When the hole h is formed at the front panel c and the knob ring 120 directly rotates with and rubs against the hole h, a problem in that the knob ring 120 may be cut or deformed may occur. Therefore, the support frame 140 may be coupled to and aligned with the hole h formed at the front panel c.

The support frame 140 may be provided with a guide recess corresponding to an outer diameter of the actuating member 150 coupled to the knob ring 120. An outer circumferential surface of the actuating member 150 may be supported by the support frame 140 and rotated to a predetermined position. A position of the knob ring 120 may be determined by the support frame 140, and the support frame 140 may be engaged with the front panel c so that the position of the knob ring 120 may be fixed with respect to the front panel c.

The support frame 140 may surround the outer circumferential surface of the actuating member 150 and may support the actuating member 150 to be rotatable around a predetermined shaft. The support frame 140 may be engaged with a guide rod 210 and a burner frame 200 to which the power level adjuster 190 may be fixed. The guide rod 210 may fix or couple the burner frame 200 to the support frame 140, and the support frame 140 may be fixed at a predetermined position with respect to the burner frame 200 via the guide rod 210.

A fixing frame 160 is coupled to the support frame 140. It may be engaged with and fixed to the support frame 140 via a fastener, such as a screw, for example. The fixing frame prevents the actuating member 150 from moving or escaping from the fixing frame 160 in a rearward direction toward an inside of the cooking apparatus 10. The fixing frame 160 may confine or restrict a rotational range of the actuating member 150 and restrict the actuating member 150 and the knob ring 120 to be rotatable only within a predetermined angle range.

The fixing frame 160 may be formed in a shape which is similar to a bow tie such that an angle between portions corresponding to wings of the bow tie may restrict the actuating member 150 to be rotatable within the predetermined angle range and a portion connecting the wings may prevent the actuating member 150 from escaping in the rearward direction.

A bearing shell 130 may be a bearing that allows the knob ring 120 to be smoothly manipulated. The bearing shell 130 may be provided with a cylindrical-shaped cylinder 134, and a circular plate 132 bent from the cylinder 134 to protrude in a radial direction. The cylinder 134 may be inserted between the outer circumferential surface of the actuating member 150 coupled to the knob ring 120 and an inner circumference surface of the support frame 140, and may reduce friction between the actuating member 150 and the support frame 140.

The circular plate 132 may be inserted between the front panel c and the knob ring 120 to reduce friction therebetween. The circular plate 132 may separate the knob ring 120 from the front panel c by a predetermined gap and may reduce generation of scratches on the front panel c due to the manipulation of the knob ring 120.

The knob ring 120 according to embodiments may provide a return or restoring type manipulation structure. The return type manipulation structure may be a structure that allows the knob ring 120 to be manipulated in a clockwise direction or a counterclockwise direction within a predetermined angle range due to an external force, and may return or restore the knob ring 120 to an original position thereof when the external force is released therefrom.

Restoring springs s1 and s2 may provide a restoring force which returns the knob ring 120 to the original position thereof. The restoring springs s1 and s2 may include a first restoring spring s1 configured to provide a restoring force in the clockwise direction and a second restoring spring s2 configured to provide a restoring force in the counterclockwise direction. When an external force is not applied to the knob ring 120, the elastic force of the first restoring spring s1 may balance with that of the second restoring spring s2 such that the knob ring 120 may be maintained at an initial position thereof.

Both ends of each of the restoring springs s1 and s2 may be fixed to the actuating member 150 and the support frame 140 to which the fixing frame 160 is fixed. The actuating member 150 and the knob ring 120 may integrally rotate such that the knob ring 120 may be maintained at the initial position thereof by elastic forces of the restoring springs s1 and s2, and may be rotated by a predetermined angle in the clockwise or counterclockwise direction. One or a first end of each of the restoring springs s1 and s2 may be connected to an elastic member holder 151 on the actuating member 150, and another or second end of each of the restoring springs s1 and s2 may be connected to a first spring holder 141 of the support frame 140 and a second spring holder 142 of the support frame 140, respectively.

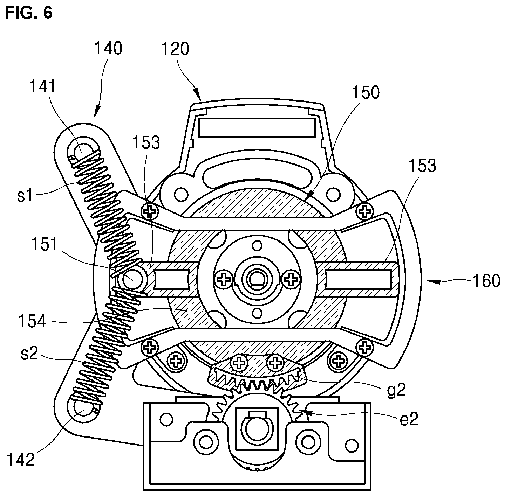

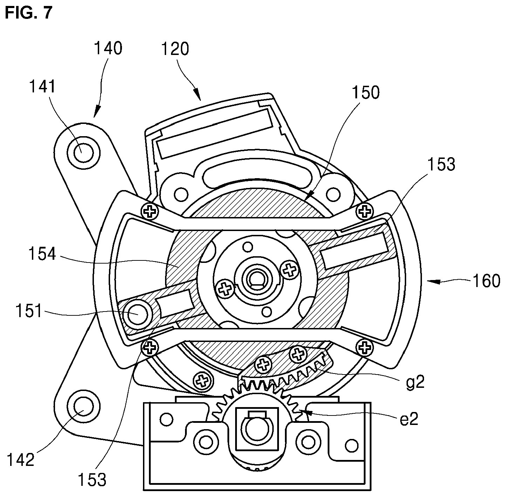

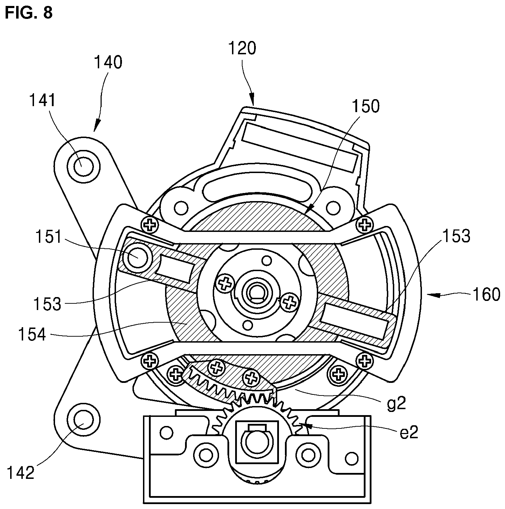

Referring to FIG. 6 through FIG. 8, for convenience of illustration, the front panel c has been omitted from the drawings. The knob handle 110 and the knob ring 120 are coupled to a front surface side of the front panel c, and the support frame 140, the actuating member 150, and the fixing frame 160 are coupled to a rear surface side of the front panel c.

The fixing frame 160 is engaged with the rear surface of the front panel c, and the actuating member 150 passes through the front panel c to be engaged with the knob ring 120. A rotational center of the actuating member 150 may be provided to coincide with an axial center of the adjustment shaft 194. The actuating member 150 may confine the axial center of the adjustment shaft 194 to be located at a predetermined position with respect to the front panel c. That is, the actuating member 150 may be fixed at the predetermined position with respect to the front panel c, and thus the adjustment shaft 194 may be fixed at an exact position with respect to the front panel c.

The actuating member 150 may be inserted into the support frame 140, may pass through the front panel c, and may partially protrude from the front panel c. A front end of the actuating member 150 may be formed in a cylindrical shape, and the cylindrical portion thereof may protrude from a front surface of the front panel c. The knob ring 120 may be coupled to the actuating member 150 that protrudes from the front surface of the front panel c. The knob ring 120 and the actuating member 150 may be coupled such that the knob ring 120 may be structurally supported by the support frame 140.

The manipulation of the knob ring 120 may be recognized based on rotation of the actuating member 150. As the knob ring 120 is a portion which is exposed to the outside of the front panel c, when an encoder configured to sense the manipulation of the knob ring 120 outside of the front panel c is provided around the knob ring 120, an exterior appearance thereof is not aesthetically pleasing. As the knob ring 120 may be integrally coupled with the actuating member 150, the knob ring encoder e2 may be provided around the actuating member 150 to sense the rotation thereof.

The knob ring gear g2 configured to transmit a rotational angle may be provided at the actuating member 150. The knob ring encoder e2 may be engaged with the knob ring gear g2 and configured to detect a rotational angle of the actuating member 150. The knob ring encoder e2 may be engaged with the knob ring gear g2 and may detect a rotational manipulation signal of the knob ring 120.

The actuating member 150 may be coupled to the pair of restoring springs s1 and s2 that return the actuating member 150 to a predetermined position. The restoring springs s1 and s2 may connect the support frame 140 to the actuating member 150. When the actuating member 150 is manipulated in the counterclockwise direction, the restoring spring s1 may provide the elastic force in the clockwise direction to return the actuating member 150 to the original position thereof. When the actuating member 150 is manipulated in the clockwise direction, the restoring spring s2 may provide the elastic force in the counterclockwise direction to return the actuating member 150 to the original position thereof.

The fixing frame 160 may be provided to prevent the actuating member 150 from escaping or moving toward the rear surface and may enable or allow the actuating member 150 to stably operate. The fixing frame 160 may prevent the actuating member 150 from escaping toward the rear surface by passing through a rear surface of the actuating member 150. The fixing frame 160 may be engaged with the support frame 140. The fixing frame 160 may confine the rotational range of the actuating member 150.

The actuating member 150 may include a actuating member body 154 and may be provided with a wing part or wing 153 that extends out to one side, and the actuating member 150 may have a structure in which the pair of restoring springs s1 and s2 are fixed to the wing 153. When a rotation range of the wing 153 is restricted by the fixing frame 160, a bidirectional rotational angle of the actuating member 150 may be constantly restricted. To more stably confine the rotation of the actuating member 150, the wing 153 may be provided at both sides of the actuating member 150, and the fixing frame 160 may equally restrict rotational ranges of the wings 153 provided at both of the sides.

The knob assembly according to embodiments may adjust a power level through manipulation of the knob handle 110 and may display a timer time through manipulation of the knob ring 120. Accordingly, the knob assembly may include the display 123 provided at the knob ring 120, the knob encoder e1 configured to detect manipulation of the knob handle 110, and the knob ring encoder e2 configured to detect manipulation of the knob ring 120.

The knob ring encoder e2 may be engaged with the knob ring gear g2 of the actuating member 150 to detect rotation of the actuating member 150. The knob ring 120 may be a returning type knob ring and may rotate within a predetermined range when an external force is applied thereto, and the knob ring 120 may return to an original position thereof when the external force is released. For example, the knob ring 120 may be manipulated to increase the timer time by being rotated a predetermined angle in the clockwise direction, and to decrease the timer time by being rotated a predetermined angle in the counterclockwise direction.

The knob handle 110 may be connected to the adjustment shaft 194 of the power level adjuster 190. The adjustment shaft 194 of the power level adjuster 190 may be a non-returning type adjustment shaft that maintains a manipulated position, and the knob encoder e1 may detect a rotational amount or a manipulated angle manipulated from a reference position. The knob encoder e1 may be engaged with the gear g1 coupled to the adjustment shaft 194 to detect rotation of the adjustment shaft 194.

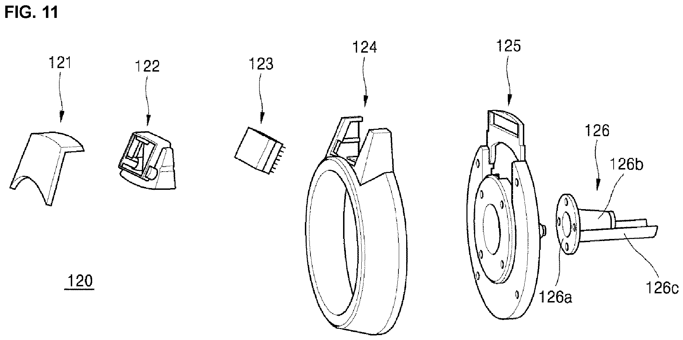

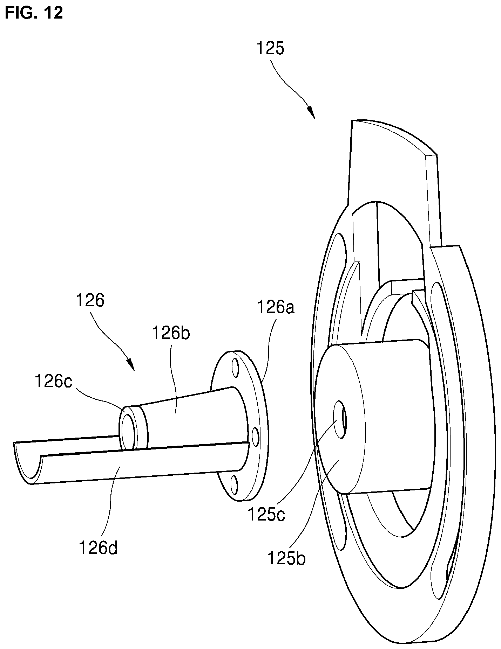

In a cooking apparatus, such as a microwave oven or an induction range, in which a power level is electronically adjusted, the power level adjuster 190 may be configured with a variable resistor, for example, so that a status of the power level adjuster 190 may be detected without separately providing the knob encoder e1. Referring to FIG. 11 and FIG. 12, the knob ring 120 may include a knob ring main body 124 configured to form an exterior appearance thereof, a rear surface plate 125 coupled to a rear surface of the knob ring main body 124, and a support pipe 126 coupled to the rear surface plate 125 and configured to support the adjustment shaft 194.

The rear surface plate 125 may be provided with a rear surface plate body and a support plate 125b configured to enter into an interior of the front panel c and protrude toward an inner side of the cooking apparatus 10. A support hole 125c configured to support the adjustment shaft 194 may be provided at or in the support plate 125b.

The support pipe 126 may be coupled to the rear surface plate 125. The support pipe 126 may be provided with a flange 126a coupled to the rear surface plate 125, a tapered pipe 126b that extends from the flange 126a, and a support rib 126d that extends longer than the tapered pipe 126b. The tapered pipe 126b may have a tapered shape in which a diameter decreases as it extends away from the flange 126a, and a support part or cap 126c configured to support the adjustment shaft 194 may be provided at a front end of the tapered pipe 126b.

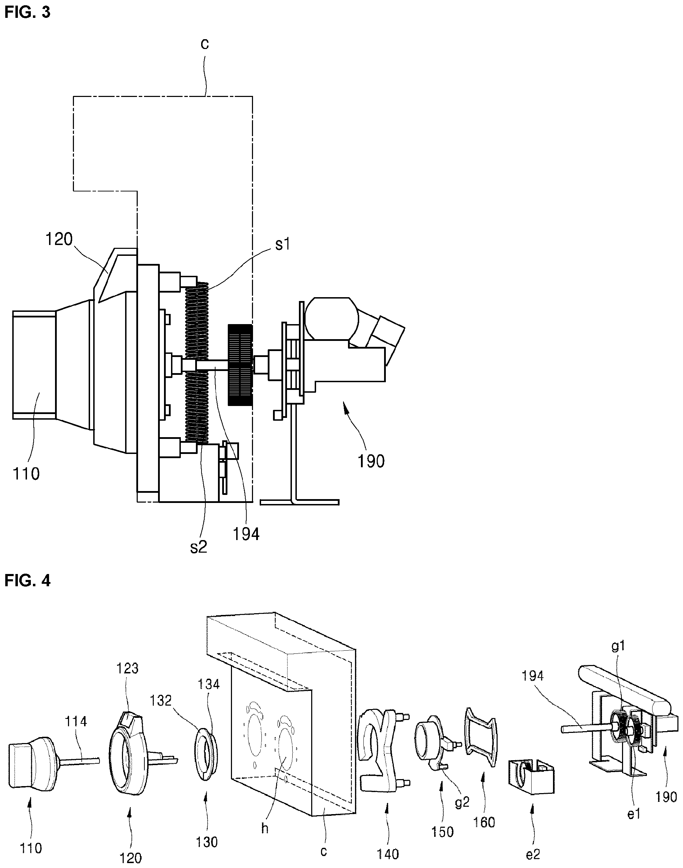

Thus, the adjustment shaft 194 may be structurally supported at two points, that is, the support hole 125c and the support cap 126c. In a related art valve structure, an adjustment shaft may be confined to a predetermined position, but as the adjustment shaft 194 may be a power level adjuster, a structure capable of stably supporting the adjustment shaft 194 may be required. The knob ring 120 may support the adjustment shaft 194 at two or more points. The knob ring 120 may support the adjustment shaft 194 at the two or more points as well as a front end of the gear g1 coupled to the adjustment shaft 194. The gear g1 (see FIG. 4) may be configured to transmit a rotational amount of the adjustment shaft 194 to the knob encoder e1, and the gear g1 may be supported on the support rib 126d.

Referring to FIG. 11, the display 123 capable of displaying the power level and timer time may be provided at the knob ring 120. The display 123 may be coupled to the knob ring main body 124 through a display housing 122, and a finishing cap 121 may be coupled to an outside of the display housing 122. The finishing cap 121 may be made of, for example, a transparent or semitransparent material to allow information displayed on the display 123 to be visible. The display 123 may be an electronic display, such as, for example, an LCD or LED device, but embodiments are not limited thereto.

Embodiments disclosed herein provide a knob assembly provided with a knob ring, which are independently manipulated, around a knob handle so that a timer time of a cooking apparatus, such as a cooking time of a corresponding burner or an oven, may be set through a manipulation of the knob ring.

A display may be provided at the knob ring, and a power level and a timer time, for example, of a corresponding cooking apparatus may be displayed on the display so that user convenience may be improved. Further, the knob assembly according to embodiments disclosed herein may be applied to a gas range as well as a composite cooking apparatus including an oven range, an induction range, and a microwave oven, for example, so that component sharing in various cooking apparatuses may be provided.

According to embodiments disclosed herein, a knob assembly is provided that may include a knob handle coupled to an adjustment shaft that is configured to adjust power level, and a knob ring configured to surround a periphery of the knob handle, provided to pass through a front panel, configured to be rotatable independent of the knob handle, and provided with a display. The knob ring may have a returning type rotational structure in which the knob ring may return to an initial position thereof when an external force is released.

The knob assembly may further include a knob ring encoder configured to detect a manipulation of the knob ring and a knob encoder configured to detect a manipulation of the knob handle, and a power level set through a manipulation detected by the knob encoder and a timer time set through the manipulate of the knob handle may be displayed on the display.

For smooth operation of the knob handle and the knob ring, the knob assembly further includes a actuating member coupled to the knob ring, a support frame coupled to the front panel and configured to support an outer circumferential surface of the actuating member, and a fixing frame coupled to the support frame and configured to prevent the actuating member from escaping from the support frame.

The knob ring may support the adjustment shaft at two or more positions thereof. The knob ring may include a knob ring main body configured to form an exterior appearance thereof, a rear surface plate coupled to a rear surface of the knob ring main body and provided with a support hole configured to support the adjustment shaft passing through the support hole, and a support pipe coupled to the rear surface plate and configured to support the adjustment shaft. The support pipe may include a flange coupled to the rear surface plate, and a tapered pipe formed to extend from the flange and provided with a support part or support configured to support the adjustment shaft.

For reducing friction when the knob ring is manipulated, the knob assembly may further include a circular plate inserted between the knob ring and the front panel, and a bearing shell provided with a cylinder which may be inserted between the actuating member and the support frame.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A cooking apparatus comprising a front panel (c) and a knob assembly provided on the front panel (c), the knob assembly comprising:
a knob (110) for adjusting a power level of a power source, the knob (110) being provided on an outside of the front panel (c);
a knob ring (120) surrounding the knob (110) and rotatable independently of the knob (110), the knob ring (120) being provided on the outside of the front panel (c);
an actuating member (150) coupled to a rear surface of the knob ring (120) to integrally rotate with the knob ring (120);
a support frame (140) to support the knob ring (120); and
a fixing frame (160) coupled to the support frame (140), the fixing frame (160) being configured to prevent the actuating member (150) from escaping from the support frame (140);
wherein the knob (110) and the knob ring (120) are coupled at a front surface side of the front panel (c), and wherein the support frame (140), the actuating member (150) and the fixing frame (160) are coupled to a rear surface side of the front panel (c) **characterized in that**
the support frame (140) is coupled to the front panel (c), and **in that**
the actuating member (150) is inserted into the support frame (140) and passes through the front panel (c) to be engaged with the knob ring (120).

2. The cooking apparatus of claim 1, wherein the knob ring (120) is movable from an initial position to a second position by an external force, and the knob ring (120) is configured to return from the second position to the initial position when the external force is released.

3. The cooking apparatus of claim 2, wherein the knob assembly further includes restoring springs (s1, s2) for providing a restoring force which returns the knob ring (120) to the initial position thereof.

4. The cooking apparatus of claim 3, wherein both ends of each of the restoring springs (s1, s2) are fixed to the actuating member (150) and the support frame (140).

5. The cooking apparatus of claim 2, 3 or 4, wherein a first restoring spring (s1) is configured to provide an elastic force in the clockwise direction to return the actuating member (150) to the initial position when the actuating member (150) is manipulated in the counterclockwise direction, and a second restoring spring (s2) is configured to provide an elastic force in the counterclockwise direction to return the actuating member (150) to the initial position when the actuating member (150) is manipulated in the clockwise direction.

6. The cooking apparatus of any one of the preceding claims, wherein the fixing frame (160) is configured to restrict the actuating member (150) and the knob ring (120) to be rotatable only within a predetermined angle range.

7. The cooking apparatus according to any one of the preceding claims when depending on claim 3, wherein the actuating member (150) includes an actuating member body (154) and a wing part (153) that extends out to one side, and a rotation range of the wing part (153) is restricted by the fixing frame (160), wherein the restoring springs (s1, s2) are fixed to the wing part (153).

8. The cooking apparatus according to any one of the preceding claims, further including a knob encoder (e1) configured to detect a rotational amount of the knob (110) and/or a knob ring encoder (e2) configured to detect a rotational amount of the knob ring (120).

9. The cooking apparatus of claim 8, wherein the knob (110) is connected to an adjustment shaft (194) of a power level adjuster (190), and the knob encoder (e1) is configured to detect a rotation amount of a gear (g1) coupled to the adjustment shaft (194).

10. The cooking apparatus of claim 8 or 9, wherein the knob ring encoder (e2) is configured to detect rotation of a knob ring gear (g2) provided at the actuating member (150).

11. The cooking apparatus according to any one of the preceding claims, wherein a display (123) is provided on the knob ring (120).

12. The cooking apparatus of claim 11, wherein a power level displayed on the display (123) is detected based on a rotational amount of the knob (110).

13. The cooking apparatus of claim 11 or 12, wherein a timer time displayed on the display (123) is detected based on manipulation of the knob ring (120).

14. The cooking apparatus of any one of the preceding claims, wherein the knob ring (120) confines or restrict a position of the knob (110) to be maintained at a certain or set position.

## Patentansprüche

1. Kochvorrichtung, die eine Frontplatte (c) und eine Knebelanordnung, die an der Frontplatte (c) vorgesehen ist, umfasst, wobei die Knebelanordnung Folgendes umfasst:
einen Knebel (110) zum Einstellen eines Leistungspegels einer Leistungsquelle, wobei der Knebel an einer Außenseite der Frontplatte (c) vorgesehen ist;
einen Knebelring (120), der den Knebel (110) umgibt und unabhängig von dem Knebel (110) gedreht werden kann, wobei der Knebelring (120) an der Außenseite der Frontplatte (c) vorgesehen ist;
ein Betätigungselement (150), das an eine Rückseite des Knebelrings (120) gekoppelt ist, um sich zusammen mit dem Knebelring (120) zu drehen;
einen Tragrahmen (140), um den Knebelring (120) zu tragen; und
einen Befestigungsrahmen (160), der an den Tragrahmen (140) gekoppelt ist, wobei der Befestigungsrahmen (160) konfiguriert ist, zu verhindern, dass das Betätigungselement (150) aus dem Tragrahmen (140) gelangt;
wobei der Knebel (110) und der Knebelring (120) an eine vordere Oberflächenseite der Frontplatte (c) gekoppelt sind und wobei der Tragrahmen (140), das Betätigungselement (150) und der Befestigungsrahmen (160) an eine hintere Oberflächenseite der Frontplatte (c) gekoppelt sind,
**dadurch gekennzeichnet, dass**
der Tragrahmen (140) an die Frontplatte (c) gekoppelt ist und dass
das Betätigungselement (150) in den Tragrahmen (140) eingesetzt ist und durch die Frontplatte (c) hindurchgeht, um mit den Knebelring (120) in Eingriff zu gelangen.

2. Kochvorrichtung nach Anspruch 1, wobei der Knebelring (120) durch eine äußere Kraft von einer Anfangsposition zu einer zweiten Position bewegt werden kann und der Knebelring (120) konfiguriert ist, von der zweiten Position zu der Anfangsposition zurückzukehren, wenn die äußere Kraft aufgehoben wird.

3. Kochvorrichtung nach Anspruch 2, wobei die Knebelanordnung ferner Rückstellfedern (s1, s2) enthält, um eine Rückstellkraft bereitzustellen, die den Knebelring (120) an seine Anfangsposition zurückbringt.

4. Kochvorrichtung nach Anspruch 3, wobei beide Enden jeder der beiden Rückstellfedern (s1, s2) an dem Betätigungselement (150) und dem Befestigungsrahmen (140) befestigt sind.

5. Kochvorrichtung nach Anspruch 2, 3 oder 4, wobei eine erste Rückstellfeder (s1) konfiguriert ist, eine Federkraft im Uhrzeigersinn bereitzustellen, um das Betätigungselement (150) in die Anfangsposition zurückzubringen, wenn das Betätigungselement (150) im Gegenuhrzeigersinn betätigt wird, und eine zweite Rückstellfeder (s2) konfiguriert ist, eine Federkraft im Gegenuhrzeigersinn bereitzustellen, um das Betätigungselement (150) in die Anfangsposition zurückzubringen, wenn das Betätigungselement (150) im Uhrzeigersinn betätigt wird.

6. Kochvorrichtung nach einem der vorhergehenden Ansprüche, wobei der Befestigungsrahmen (160) konfiguriert ist, das Betätigungselement (150) und den Knebelring (120) derart einzuschränken, dass sie nur in einem vorgegebenen Winkelbereich gedreht werden können.

7. Kochvorrichtung nach einem der vorhergehenden Ansprüche, wenn abhängig von Anspruch 3, wobei das Betätigungselement (150) einen Betätigungselementkörper (154) und ein Flügelteil (153), das sich nach einer Seite hin erstreckt, enthält und ein Drehbereich des Flügelteils (153) durch den Befestigungsrahmen (160) eingeschränkt ist, wobei die Rückstellfedern (s1, s2) an dem Flügelteil (153) befestigt sind.

8. Kochvorrichtung nach einem der vorhergehenden Ansprüche, die ferner eine Knebel-Codiereinrichtung (e1), die konfiguriert ist, eine Drehmenge des Knebels (110) zu detektieren, und/oder eine Knebelring-Codiereinrichtung (e2), die konfiguriert ist, eine Drehmenge des Knebel-Rings (120) zu detektieren, enthält.

9. Kochvorrichtung nach Anspruch 8, wobei der Knebel (110) mit einer Einstellwelle (194) einer Leistungspegel-Einstelleinrichtung (190) verbunden ist und die Knebel-Codiereinrichtung (e1) konfiguriert ist, einen Drehbetrag eines Zahnrads (g1), das an die Einstellwelle (194) gekoppelt ist, zu detektieren.

10. Kochvorrichtung nach Anspruch 8 oder 9, wobei die Knebelring-Codiereinrichtung (e2) konfiguriert ist, eine Drehung eines Knebelringzahnrads (g2), das an dem Betätigungselement (150) vorgesehen ist, zu detektieren.

11. Kochvorrichtung nach einem der vorhergehenden Ansprüche, wobei auf dem Knebelring (120) eine Anzeige (123) vorgesehen ist.

12. Kochvorrichtung nach Anspruch 11, wobei ein Leistungspegel, der auf der Anzeige (123) angezeigt wird, basierend auf einer Drehbetrag des Knebels (110) detektiert wird.

13. Kochvorrichtung nach Anspruch 11 oder 12, wobei eine Timer-Zeit, die auf der Anzeige (123) angezeigt wird, basierend auf einer Betätigung des Knebelrings (120) detektiert wird.

14. Kochvorrichtung nach einem der vorhergehenden Ansprüche, wobei der Knebelring (120) eine Position des Knebels (110) derart begrenzt oder einschränkt, dass sie in einer bestimmten oder eingestellten Position bleibt.

## Revendications

1. Appareil de cuisson comportant un panneau avant (c) et un ensemble de bouton agencé sur le panneau avant (c), l'ensemble de bouton comportant :
un bouton (110) pour régler un niveau de puissance d'une source de puissance, le bouton (110) étant agencé sur un extérieur du panneau avant (c) ;
une bague de bouton (120) entourant le bouton (110) et pouvant tourner indépendamment du bouton (110), la bague de bouton (120) étant agencée sur l'extérieur du panneau avant (c) ;
un élément d'actionnement (150) couplé à une surface arrière de la bague de bouton (120) pour tourner d'un seul tenant avec la bague de bouton (120) ;
un châssis de support (140) pour supporter la bague de bouton (120) ; et
un châssis de fixation (160) couplé au châssis de support (140), le châssis de fixation (160) étant configuré pour empêcher l'élément d'actionnement (150) de s'échapper du châssis de support (140) ;
dans lequel le bouton (110) et la bague de bouton (120) sont couplés sur un côté de surface avant du panneau avant (c), et dans lequel le châssis de support (140), l'élément d'actionnement (150) et le châssis de fixation (160) sont couplés à un côté de surface arrière du panneau avant (c),
**caractérisé en ce que**
le châssis de support (140) est couplé au panneau avant (c), et **en ce que**
l'élément d'actionnement (150) est inséré dans le châssis de support (140) et passe à travers le panneau avant (c) pour venir en prise avec la bague de bouton (120).

2. Appareil de cuisson selon la revendication 1, dans lequel la bague de bouton (120) peut être déplacé d'une position initiale à une seconde position par une force externe, et la bague de bouton (120) est configurée pour retourner de la seconde position à la position initiale lorsque la force externe est relâchée.

3. Appareil de cuisson selon la revendication 2, dans lequel l'ensemble de bouton inclut en outre des ressorts de rappel (s1, s2) pour fournir une force de rappel qui ramène la bague de bouton (120) à la position initiale de celle-ci.

4. Appareil de cuisson selon la revendication 3, dans lequel les deux extrémités de chacun des ressorts de rappel (s1, s2) sont fixées à l'élément d'actionnement (150) et au châssis de support (140).

5. Appareil de cuisson selon la revendication 2, 3 ou 4, dans lequel un premier ressort de rappel (s1) est configuré pour fournir une force élastique dans le sens horaire pour ramener l'élément d'actionnement (150) à la position initiale lorsque l'élément d'actionnement (150) est manipulé dans le sens antihoraire, et un second ressort de rappel (s2) est configuré pour fournir une force élastique dans le sens antihoraire pour ramener l'élément d'actionnement (150) à la position initiale lorsque l'élément d'actionnement (150) est manipulé dans le sens horaire.

6. Appareil de cuisson selon l'une quelconque des revendications précédentes, dans lequel le châssis de fixation (160) est configuré pour restreindre l'élément d'actionnement (150) et la bague de bouton (120) pour pouvoir tourner uniquement sur une plage angulaire prédéterminée.

7. Appareil de cuisson selon l'une quelconque des revendications précédentes lorsque dépendante de la revendication 3, dans lequel l'élément d'actionnement (150) inclut un corps d'élément d'actionnement (154) et une partie d'aile (153) qui s'étend vers l'extérieur jusqu'à un côté, et une plage de rotation de la partie d'aile (153) est restreinte par le châssis de fixation (160), lorsque les ressorts de rappel (s1, s2) sont fixés à la partie d'aile (153).

8. Appareil de cuisson selon l'une quelconque des revendications précédentes, incluant en outre un codeur de bouton (e1) configuré pour détecter une quantité de rotation du bouton (110) et/ou un codeur de bague de bouton (e2) configuré pour détecter une quantité de rotation de la bague de bouton (120).

9. Appareil de cuisson selon la revendication 8, dans lequel le bouton (110) est relié à une tige de réglage (194) d'un dispositif de réglage de niveau de puissance (190), et le codeur de bouton (e1) est configuré pour détecter une quantité de rotation d'un engrenage (g1) couplé à la tige de réglage (194).

10. Appareil de cuisson selon la revendication 8 ou 9, dans lequel le codeur de bague de bouton (e2) est configuré pour détecter une rotation d'un engrenage de bague de bouton (g2) agencé sur l'élément d'actionnement (150).

11. Appareil de cuisson selon l'une quelconque des revendications précédentes, dans lequel un affichage (123) est agencé sur la bague de bouton (120).

12. Appareil de cuisson selon la revendication 11, dans lequel un niveau de puissance affiché sur l'afficheur (123) est détecté sur la base d'une quantité de rotation du bouton (110).

13. Appareil de cuisson selon la revendication 11 ou 12, dans lequel un temps de minuterie affiché sur l'affichage (123) est détecté sur la base d'une manipulation de la bague de bouton (120).

14. Appareil de cuisson selon l'une quelconque des revendications précédentes, dans lequel la bague de bouton (120) confine ou restreint une position du bouton (110) pour le maintenir à une certaine position ou à une position réglée.
